# EUROPEAN PATENT APPLICATION

(11) **EP 4 588 736 A1**
(43) Date of publication of application: **23.07.2025**
(21) Application number: 24153163.1
(22) Date of filing: 22.01.2024
(51) Int. Cl.: B60T 13/26, B60T 17/00

(54) **MULTI-CIRCUIT PROTECTION VALVE UNIT FOR AN AIR PROCESSING UNIT AND AIR PROCESSING UNIT OF A COMMERCIAL VEHICLE**

(71) Applicant: ZF CV Systems Europe BV, 1170 Brüssel (BE)
(72) Inventor: SEMENIUK, Maciej, 58-506 Jelenia Gora (PL)
(74) Representative: Copi, Joachim

(57) **Abstract**

The invention relates to a multi-circuit protection valve unit (3) for an air processing unit of a commercial vehicle, said multi-circuit protection valve unit comprising a multi-circuit protection valve (4) and an ECU (6) assembled to said multi-circuit protection valve (4), wherein said multi-circuit protection valve (4) comprises
- an MCPV housing (5) comprising an interface body part (8) made of metal and a cover part (10) made of metal, said interface body part (8) and said cover part (10) defining an interior space between them,
- housing screws (11) connecting said interface body part (8) and said cover part (10) together,
- functional parts (18), including pneumatic valves (18a), provided in said interior space (13),
- sealing means (15) provided between said interface body part (8) and said cover part (10),

separator means (14) provided between said interface body part (8) and said cover part (10), thereby defining pneumatic passageways in said interior space,
wherein said interface body part (8) comprises pneumatic ports (30) for connecting said multi-circuit protection valve unit (3) to consumer circuits.

These elements without the ECU are assembled as a stack in a common assembling direction (A), wherein said housing screws (11) are inserted in said assembling direction (A). The ECU (6) is attached to said MCPV housing (5) in an ECU mounting direction (B) that is perpendicular to said assembling direction (A).

This stack design allows a high degree of flexibility and variability, in particular depending on the available installation space and the position of external elements of the air pressure system, with high stability.

## Description

The invention relates to a multi-circuit protection valve unit for an air processing unit, an air processing unit of a commercial vehicle, and a method for assembling a multi-circuit protection valve unit.

Pneumatic systems of commercial vehicles in general include a compressor for delivering compressed air and an air processing unit for drying and filtering the compressed air and for distributing the dried compressed air to the subsequent consumer circuits. The air processing unit comprises an air dryer and a multi-circuit protection valve for distributing the compressed air to the subsequent consumer circuits, in particular pneumatic brake circuits. Electronically controlled air processing units comprise an ECU for controlling solenoid valves in order to start and finish supply modes and regeneration modes.

The air processing unit can be mounted to the vehicle structure of the commercial vehicle. The air dryer can be made as a metal cast part for receiving a dryer cartridge. The multi-circuit protection valve comprises several valves, in particular overflow valves, provided in a metal casing.

In DE 10 2010 053 985 A1, a modular air processing unit is disclosed in which an air dryer part and a priority device each comprise an own casing. Those modular systems offer a greater flexibility; however, they result in a higher total weight and higher manufacturing costs.

EP 3 234 378 B1 refers to an air supply device comprising an air dryer, a valve device with a multi-circuit protection valve and further valves, a pressure limiter, an electronic control unit, and several casing parts in which the valves and further functional parts are received. At least one casing part is made of plastic. At least one part of the valve device, including the multi-circuit protection valve, the ECU, and the pressure limiter, is provided in a second casing made of plastic, wherein the second casing is placed between a first casing and a third casing, both of which are made of metal.

DE 198 61 222 B4 describes an air processing unit with a single metal casing in which an electro-pneumatic pressure control, a multi-circuit valve, several electromechanical pressure control devices, a pressure sensor, and an electronic control unit are provided. An air dryer cartridge is mounted onto the metal casing.

In EP 3 234 378 B1 an air supply device is disclosed that provides a common assembling direction for its parts, including the ECU. Thereby, manufacturing is facilitated; however, the design is relatively inflexible.

### Summary of the invention

An object of the invention is to provide a multi-circuit protection valve unit for an air processing unit and a method for producing such a multi-circuit protection valve unit that allow for a flexible design according to changing requirements. Furthermore, an air processing unit and a pneumatic system comprising the multi-circuit protection valve unit are provided.

According to one aspect of the invention, a multi-circuit protection valve unit according to claim 1 is provided. According to a second aspect of the invention, an air supply unit according to claim 12 is provided. According to a further aspect of the invention, a method for assembling a multi-circuit protection valve unit according to claim 16 is provided.

Thus, the multi-circuit protection valve unit is preferably formed as a stack or sandwich structure, which includes an MCPV housing comprising an interface body part made of metal, e.g. aluminium, and a cover part made of metal, e.g. aluminium, said interface body part and said cover part defining an interior space between them and being connected by housing screws. Thus, an MCPV housing with outer parts of metal is provided. Between these outer metal parts of the MCPV housing there are provided functional parts, including pneumatic valves, sealing means, and separator means, thereby defining pneumatic passageways in said interior space. The interface body part comprises pneumatic ports, in particular outlet ports, for connecting the multi-circuit protection valve unit to consumer circuits.

The interface body part, the cover part, the sealing means, the separator means, and at least some of said functional parts, in particular all functional parts, are assembled as a stack in a common assembling direction, wherein the housing screws are inserted in the assembling direction. An ECU is attached to the MCPV housing in an ECU mounting direction that is perpendicular to said assembling direction.

The inventive multi-circuit protection valve unit offers several benefits:
The stack design allows a high degree of flexibility and variability, in particular depending on the available installation space and the position of external elements of the air pressure system. This allows easy scaling according to the requirements, relatively simple redesign and adaption of the multi-circuit protection valve unit and the air processing unit, in particular by changing the mounting face of the MCPV housing for mounting the ECU.

The stack of the multi-circuit protection valve, i.e. without the ECU, can be formed and tightened with little effort and ensures a high stability and freedom in design of the pneumatic scheme of the multi-circuit protection valve. However, by assembling the ECU from the side, the degree of freedom is significantly increased. This surprisingly simple additional mounting step does not complicate the manufacturing process, but offers many advantages in design and stability.

According to a preferred embodiment, the interface body part and the cover part each comprise ECU screw threads extending in said ECU mounting direction, respectively, and the ECU is assembled to said interface body part and said cover part via ECU screws inserted in said ECU mounting direction into said ECU screw threads.

Thus, the ECU can be fixed to both outer metal parts, i.e. the interface body part and the cover part, thereby increasing the stability of the stack by a form closure or positive mechanical engagement, additionally to the housing screws.

According to a preferred embodiment, the separator means for defining pneumatic passageways and/or functional layers of the functional parts can be made of plastic, thereby reducing the total weight without impairing the stability, since the outside body parts are made of metal, to provide a safe interface for the customer on one side and stability to the other side. The cover part made of metal, in particular aluminium, ensures a high stability and preferably serves as radiator for solenoids.

Both outer metal parts of the MCPV housing, i.e. the interface body part and the cover part, can be made as cast parts of aluminium, since the further functional features can be realised by the separator means and the functional parts, thereby reducing the weight and enabling an advantageous cooling.

According to a preferred embodiment, the MCPV housing has a rectangular or cuboid shape with four rectangular side faces, so that each of the sides or side faces can be designed to receive the ECU. In particular, a flange can be formed on one of said faces, and the ECU (6) is assembled to the flange.

Furthermore, a sensor bore for measuring a pressure can be provided in one metal part, in particular the interface body part, so that the sensor bore extends directly to the flange sealingly receiving the ECU, without additional lines which could impair the measuring signal.

The functional parts preferably comprise one or more elements of the group consisting of: overflow valves, pressure limiters, check valves, double check valves, solenoid valves. Thus, a high functionality can be achieved.

Plugs of the electric components, in particular the solenoid valves, can be provided in any layer and on any side face of the stack.

The inventive design with a separate ECU further allows an easy swapping of the ECU or just the housing of the ECU.

Further, a scaling of the multi-circuit protection valve and/or the ECU is facilitated. In particular, the cross-section of the multi-circuit protection valve can be enlarged and/or the cross-section of the ECU can be amended, without influencing the size of the other parts. Thus, additional functionalities, for example an electro-pneumatic handbrake and/or a trailer control module can be incorporated into the air processing unit. Size and position of the MCPV and the ECU can be adjusted to the specific requirements, with a relatively simple redesign.

According to a preferred embodiment, the pneumatic ports of the MCPV are provided on a single side of the MCPV, in particular aligned along the common assembling direction. Thus, all pneumatic connections, the pneumatic inlet, and the outgoing pneumatic connections for the pneumatic outlets, can be assembled from one side. The other sides are available for further specifications. Thus, a high flexibility in design, in particular in a problematic, narrow assembling space, is possible.

The inventive method of assembling a multi-circuit protection valve unit comprises in particular the process steps of
- providing parts of an MCPV as a stack of outer metal parts, which are an interface body part and a cover part, at least one separator means, sealing means, for example gaskets, and functional parts - step 1,
- inserting and tightening housing screws through the interface body part and the cover part in an assembling direction, thereby fixing the interface body part and the cover part together and forming the MCPV housing, thereby closing and sealing an interior space, in particular as a sandwich structure containing the functional parts in the interior space of the MCPV housing - step 2
- assembling an ECU to the MCPV housing in an ECU assembling direction, which is perpendicular to the assembling direction - step 3.

The inventive method is in particular provided to produce the inventive multi-circuit protection valve unit. It enables a simple and fast manufacturing of the inventive multi-circuit protection valve unit, thereby producing a multi-circuit protection valve unit with compact design and high robustness.

The abbreviations MCPV and MCPVU are used below for multi-circuit protection valve and multi-circuit protection valve unit, respectively.

### Description of preferred embodiments

The invention is hereinafter described in more detail with reference to the appended drawings, wherein
- Fig. 1: is an exploded view of an air processing unit APU comprising an MCPVU and an air dryer unit;
- Fig. 2: is a perspective exploded view of an MCPVU according to first embodiment, with an ECU assembled to a side face of an MCPV;
- Fig. 3: is a front view of the assembled MCPVU of figure 2;
- Fig. 4: and a side view of the assembled MCPVU of figure 2 and 3;
- Fig. 5: a perspective exploded view of an MCPVU according to a further embodiment, with the ECU mounted on top of the MCPV;
- Fig. 6: a front view of the assembled MCPVU of figure 5;
- Fig. 7: a side view of the assembled MCPVU of figure 5 and 6;
- Figs. 8 to 10: different positions and arrangements of MCPVUs of figures 2 to 7 in available installation spaces;

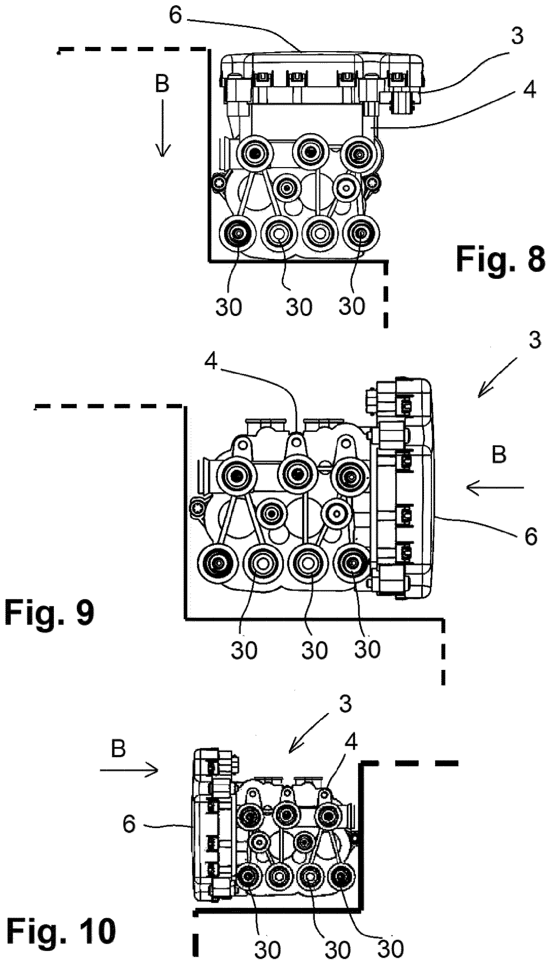

- Fig. 8: the arrangement of an MCPVU with an ECU on top, in an available installation space;
- Fig. 9: the arrangement of an MCPVU with ECU on the right side in an available installation space;
- Fig. 10: the arrangement of an MCPVU with a different ECU orientation in an available installation space;

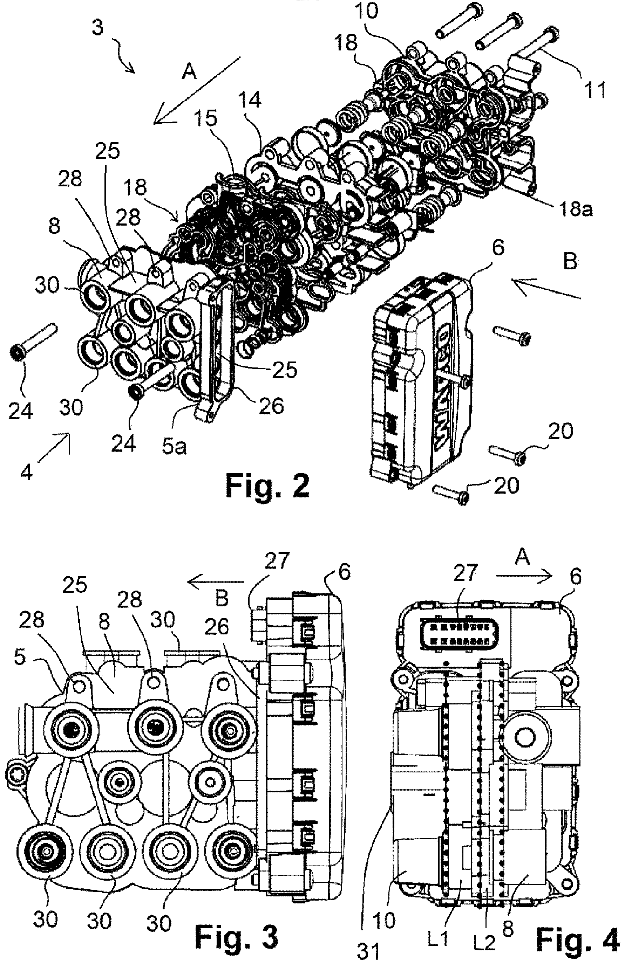

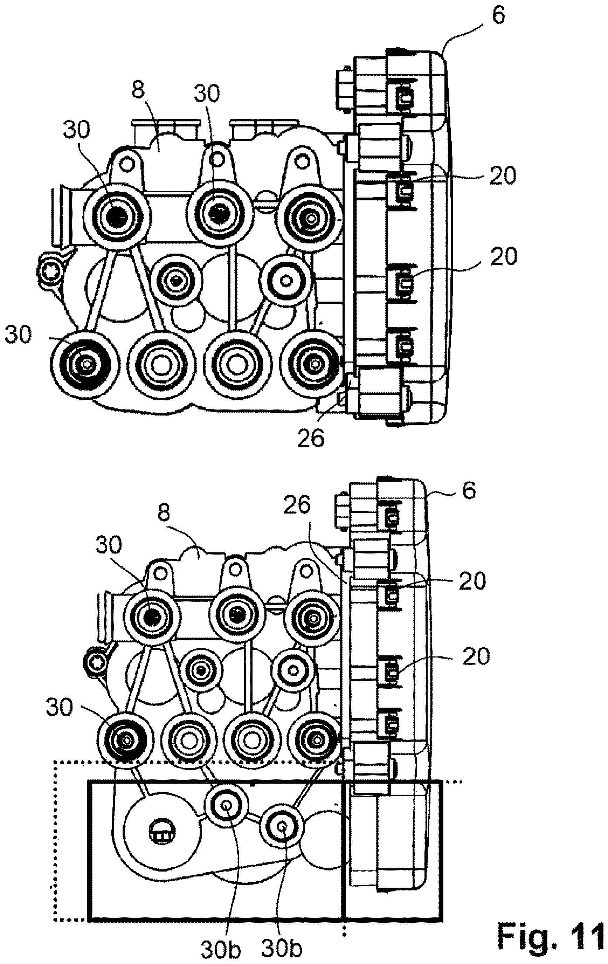

- Fig. 11: the MCPVU of figure 3 compared to a modified embodiment with expanded housing (bottom);

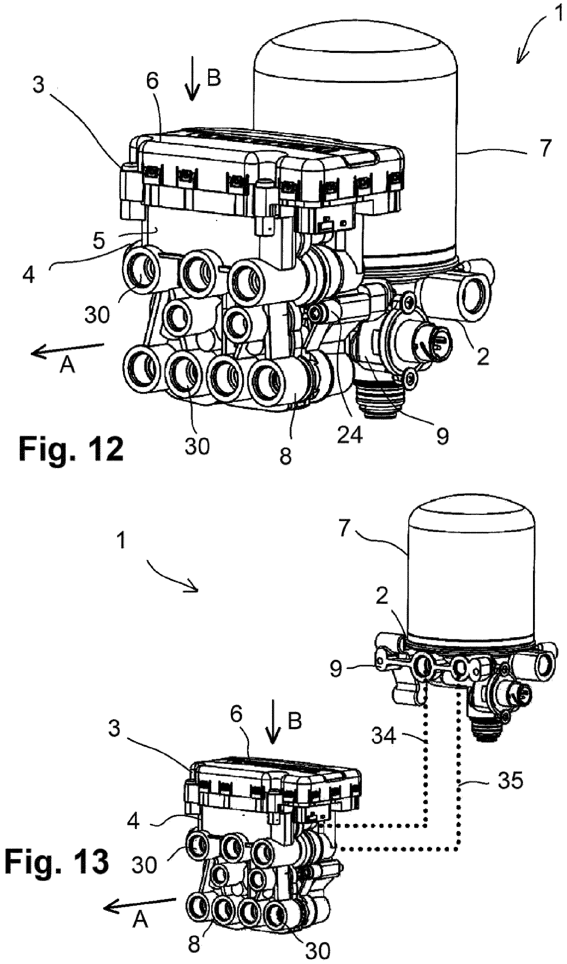

- Fig. 12: an air processing unit comprising an air dryer directly assembled to an MCPVU;
- Fig. 13: an air processing unit comprising an air dryer provided separately to an MCPVU;

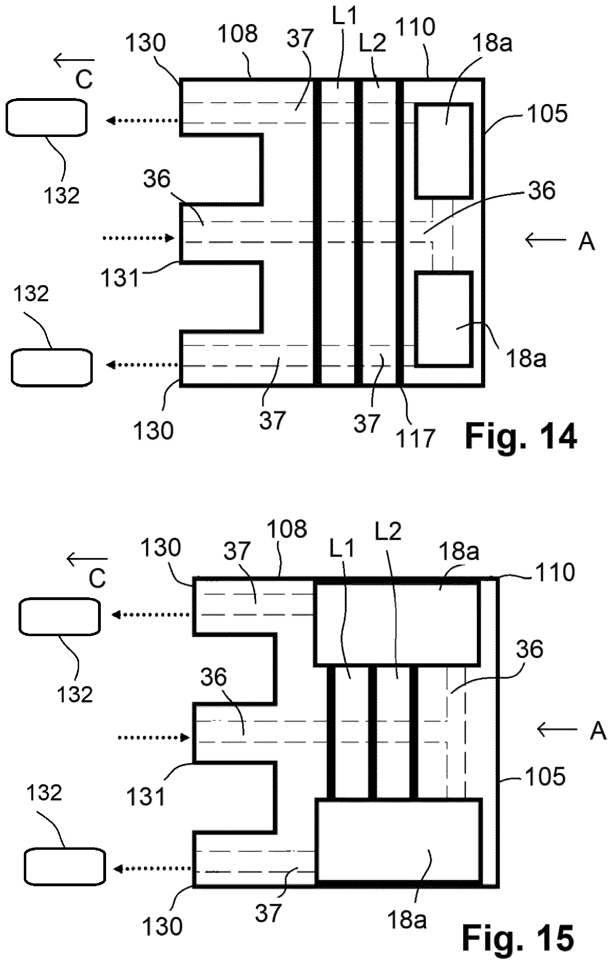

- Fig. 14: an MCPV according to an embodiment with an inlet port and outlet ports extending in the same direction, with an exemplary position of overflow valves in one of the bodies; and
- Fig. 15: a further embodiment of an MCPV with an inlet port and outlet ports extending in the same direction, with an exemplary position of overflow valves across multiple bodies.

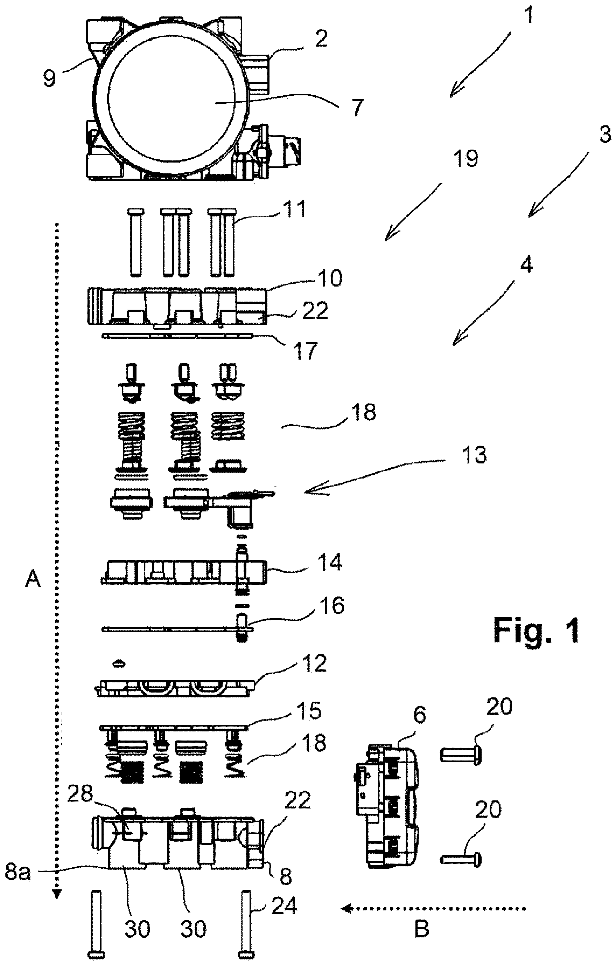

Fig. 1 shows an air processing unit APU 1 comprising an air dryer unit 2 and a multi-circuit protection valve unit MCPVU 3, the MCPVU 3 comprising a multi-circuit protection valve MCPV 4 and an ECU 6 attached to the MCPV 4. The MCPV 4 has an MCPV housing 5, which is in particular comprised of an interface body part 8 and a cover part 10, both made of aluminium and defining between them an interior space 13 in which functional parts 18 are contained. The elements of the MCPV 3 are stacked as a sandwich structure or a stack 19, in particular a stack pile along a single assembling direction A, as can be seen from Figs. 1 and 2.

The MCPV 4, see Fig. 1, comprises the interface body part 8 and the cover part 10 as outer metal parts of the MCPV housing 5 and plastic separators 12, 14 between them. Gaskets 15, 16, 17 are provided between the outer metal parts 8, 10 and the plastic separators 12, 14 and serve to seal the interior space 13 structured by these housing elements 8, 12, 14, 10, thereby defining pneumatic passageways 36, 37 in the interior space 13. In the shown embodiment, two separators 12, 14 are provided, but their number can be chosen according to the pneumatic scheme to be reproduced. Thus, a variety of pneumatic passageways can be provided including a supply line 36 and an outlet line 37. The functional parts 18, in particular overflow valves 18a, pressure limiters, and solenoids, are provided in these pneumatic passageways 36, 37 according to the pneumatic scheme of the MCPV 4. The interface body part 8 comprises pneumatic outlet ports 30 for the connection of pneumatic conduits of subsequent pneumatic consumer circuits 132, wherein most or all pneumatic outlet ports 30 are provided on its outer connection face 8a and extend in the assembling direction A. The cover part 10 comprises an inlet port 31 connected to the air dryer 2 for receiving dried compressed air; furthermore, the cover part 10 serves as a radiator for cooling the functional parts 18, in particular solenoids.

The stack 19 of elements of the MCPV 4 is fixed together by housing screws 11 inserted in the assembling direction A. The housing screws 11 are set through the interface body part 8 and the cover 10; according to the embodiment of Fig. 1, the housing screws 11 are screwed into housing threads 28 provided in the interface body part 8.

The air dryer unit 2 comprises a dryer body 9, which is made as a metal cast part, and a cartridge 7 mounted on the dryer body 9, as usual, by means of a thread or bayonet coupling.

The ECU 6 is assembled to the MCPV 4 along an ECU mounting direction B which is perpendicular to the MCPV assembling direction A. ECU screws 20 are inserted through the ECU 6 along the ECU mounting direction B and screwed into ECU screw threads 22 provided in the valve housing 5. According to a preferred embodiment, the ECU 6 is assembled to both metal parts of the MCPV housing 5, i.e. the interface body part 8 and the cover part 10. Thus, the ECU screw threads 22 are provided in the interface body part 8 and the cover part 10, respectively, and extend in the ECU mounting direction B. This package helps to stabilize the sandwich structure of the MCPV 3.

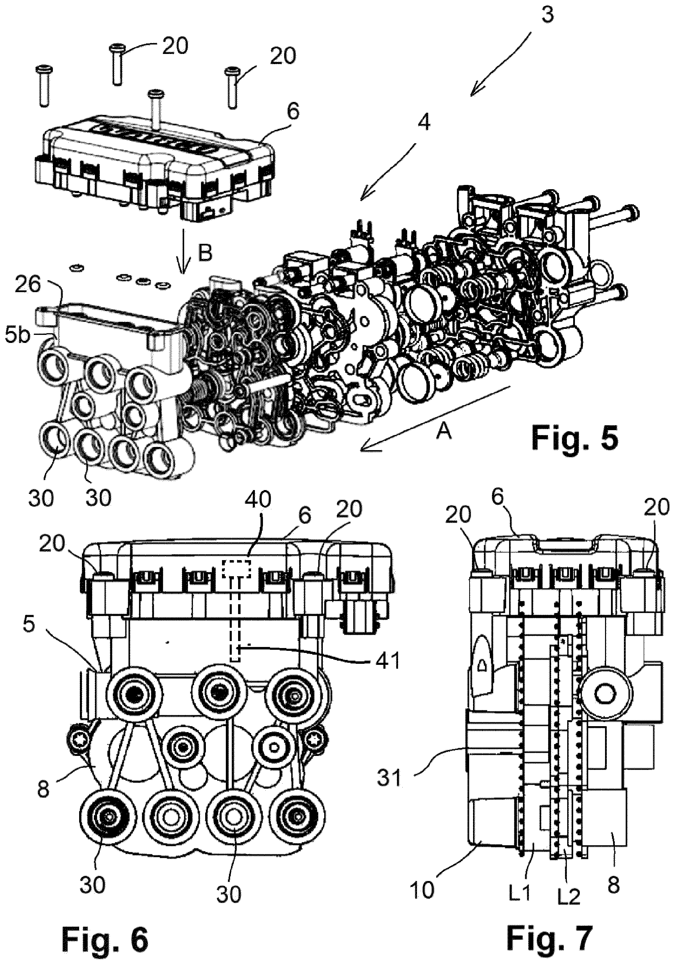

The ECU 6 is mounted on a mounting face which is a side face 5a of the MPCV housing 5. Each side of the MPCV housing 5 can be designed as a mounting face, as can be seen from Figs. 2 and 5. The MCPV housing 5 preferably has a rectangular or cuboid shape with rectangular side faces 25. According to the embodiments of Figs. 2 and 5, a flange 26 for sealingly receiving the ECU 6 is provided on the mounting face 5a, which is one of the side faces 25. As indicated by dashed lines in the front view of Fig. 6, the ECU 6 comprises a pressure sensor 40 for measuring the pressure in a sensor bore 41 in the MCPV 4. The sensor bore 41 is preferably provided in the interface body part 8. The ECU 20 can comprise a plug 27 or connector to be connected to a data bus of the commercial vehicle and other electrical contacts, in particular for controlling solenoids in the MCPV 4.

Assembling the MCPV unit 3 can therefore be carried out by sticking the elements of the MCPV 4 in the assembling direction A together, inserting and tightening the housing screws 11, thus forming the MCPV 3, and then attaching the ECU 6 in the ECU mounting direction B to the mounting face 5a of the MPCV housing 5 and fixing it by means of the ECU screws 20. The assembled MCPV unit 3 is afterwards fixed to the air dryer unit 2 by means of connecting screws 24, in particular in the assembling direction A, as can be seen from Fig. 1.

Figs. 2, 3 and 4 show embodiments of an MCPV unit 3 with a mounting face 5a on a right-hand side. Figs. 5 to 6 show another embodiment of an MCPV unit 3, which corresponds substantially to the embodiment of fig. 2 to 4, but the mounting face is provided on a top side 5b. Thus, the ECU screw threads 22 for receiving the ECU screws 20 are provided in a top area of the MCPV housing 5.

The side views of Figs. 4 and 7 show the sandwich construction of several functional layers L1, L2, as indicated by dotted lines, in particular with two or more layers of functional parts 18 stacked along the assembling direction A and provided between the interface body part 8 and the cover part 10.

The ECU 6 may be mounted on any side or face of the MCPV housing 5, the embodiments of Figs. 2 to 4 and Figs. 5 to 7 showing two exemplary possible positions. The MCPV housing 5 of these embodiments is different; it is not necessary that a design is provided for attaching the ECU 6 to any side of the same MCPV housing 5 with identical interface base part 8 and cover part 10. However, re-design to change from, for example, the embodiment of Figs. 2 to 4 to the embodiment of Figs. 5 to 7 is relatively easy.

Figs. 8 to 10 show various positions and arrangements of the MCPV unit 3 in an available installation space or mounting space of the commercial vehicle, in particular an installation space provided in the vehicle structure of the commercial vehicle. In these arrangements, the ECU 6 preferably extends in a free, uncovered direction to enable the data connection by insertion of electrical plugs. Furthermore, the pneumatic ports are not covered by the vehicle structure. Thus, the air processing unit 1 with its air dryer unit 2, MCPV 4 and ECU 6 can be designed in such a way that all electrical and pneumatic connections are provided in optimum positions.

In Fig. 8, the ECU 6 is at the top, with its plug 27 on the right side. This provides space for additional functionality expansion. In Fig. 9, the ECU 6 is located on the right side, whereas the connector is provided on the top side. This provides possible space for additional functionality to be added at appropriate locations. Fig. 10 shows a further positioning with the ECU 6 on the left side. The space available for expansion is thus rotated with respect to Fig. 9.

Fig. 11 compares the MCPV unit 4 of Fig. 3 (top in Fig. 11) and an extended embodiment (bottom). The extended housing variant accommodates more functionality. Thus, additional pneumatic ports 30b can be provided in the MCPV housing 5 and the ECU 6 may be extended with a longer housing to accommodate a printed circuit board with logic, sensors, solenoid control, etc. For example, an electronic parking brake control may be provided as an additional function, with a corresponding additional pneumatic ports and functionality, as an extended embodiment.

Thus, in Fig. 11 the MCPV unit 5 is shown at the top as the basic variant, while the extended variants comprise the identical arrangement of this basic variant and additional pneumatic ports and functional area of the ECU 6.

The air dryer unit 2 can be assembled with the MCPV unit 3 in a direct fluid connection, or via additional fluid connections. Fig. 12 shows an embodiment with a direct fluid connection between the air dryer unit 2 and the MCPV unit 3. The MCPV housing 5, comprising the housing parts 8, 10, is screwed to the housing of the air dryer unit 2 by means of the connecting screws 24 shown in Fig. 1. In Fig. 13, pneumatic fluid lines, in particular pipes or hoses, can be provided between the air dryer unit 2 and the MCPV unit 3, thus allowing separate positioning of the air dryer unit 2 and the MCPV unit 3. The connecting screws 24 of Fig. 1 are therefore not required. Pneumatic connection 34, 35 can thus be realized as pneumatic lines, pneumatic pipes or pneumatic hoses.

According to the embodiments of Figs. 14 and 15, all pneumatic ports 130, 131, i.e. the inlet port 131 and the outlet ports 130 of the MCPV housing 105 are provided on the same side and are aligned in the same direction or in parallel. Preferably, they are provided in the interface body part 108, see Figs. 1 to 13, which is made of metal and is opposite to the other metal part, the cover part 110. Thus, a common connecting direction C is provided, which in Figs. 14, 15 is to the left. Functional parts 18, including overflow valves 18a, are provided in the MCPV housing 105. In particular, the overflow valves 18a serve as pneumatic end parts or pneumatic outlet parts of the functional parts 18 or the functional valve equipment of the MCPV unit 3.

Figs. 14 and 15 show embodiments with an MCPV housing 105 comprising two outlet ports 130 and one inlet port 131, which are directed in the single connecting direction C, which is preferably identical (or reverse) to the assembling direction A of the stack 19.

The supply line 36 extending from the inlet port 131 is depicted by dashed lines and extends from the interface body part 108 through the stack 19 of layers of the MCPV housing 105, which e.g. comprises the layers L1, L2 of Figs. 4 and 7, to the cover part 110 where it branches to several lines, according to the pneumatic scheme of the multi-circuit protection valve 3, and connects functional parts 18, which include the overflow valves 18a (preferably more functional parts 18 are provided). The outlet lines 37 start from the overflow valves 18a, respectively, and extend to the outlet ports 130, thereby extending through the stack 19 of layers, including the cover part 110, the additional layers L1, L2, and the interface body part 108. Gaskets 117 and other sealing means, see Figs. 1 to 13, between the layers 110, L2, L1, and 108 provide these sealed air channels or gasket channels traversing the stack 19 of layers.

In the embodiment of Fig. 14, at least the overflow valves 18a, preferably all functional parts 18, are provided in the cover part 110, whereas in the embodiment of Fig. 15, the overflow valves 18a and/or other functional parts 18 extend over at least two layers, for example all layers 110, L2, L1, 108. In particular, some of the functional parts 18 may be positioned in any of the layers 108, L1, L2, 110. Branches of the pneumatic lines 35 can be provided in any of the layers 108, L1, L2, 110, so that the sealed supply passage can be redirected within any of the layers to reach a required position for supply of the valves. Thus, the supply lines 36 and outlet lines 37 can be arranged in multiple bodies or cast parts, with gaskets and separator parts in between, and held by screws, as in the previous embodiments of Figs. 1 to 13.

The embodiments of Figs. 14 and 15 enable the benefit, that all pneumatic MCPV ports 130, 131 can be accessed from one side, which leads to easier packaging of the commercial vehicle. Further, the bodies or casing parts 108, 110 can be simplified.

In the planar view of Figs. 14 and 15, the MPCV housing 105 (and the MCPV unit 3) has a rectangular or quadratic shape; it preferably has a cuboid shape as the previous embodiments, thereby realizing a compact and robust design.

The MCPV unit 3 of the embodiment of Figs. 14 and 15 can comprise any additional assemblies and functional parts 18, in particular functional parts described in the previous embodiments of Figs. 1 to 13, for example check valves, pressure limiters, solenoid valves, pressure sensors, and plugs.

In addition, the ECU 6 of the previous embodiments is mounted on any side of the cuboid MPCV housing 105 of Figs. 14 and 15 other than the left and right sides; the left side is used to connect the tubing. Thus, the MCPV unit 3 can be positioned or placed in confined spaces. The inlet port 131 is preferably connected to the air dryer unit 2 by a conduit or pneumatic connection 34, 35 such as a hose or pipe, analogously to Fig. 13, but with the conduit placed on the inlet port 131 on the interface part 108 rather than on the cover part 110.

According to these embodiments, the pneumatic outlets 130 of the overflow valves 18a are facing the same connecting direction C as the inlet port 131. However, other pneumatic outlets may extend in different directions. In particular, the connecting direction C can coincide with the assembling direction A; however, the connecting direction C can differ from the assembling direction A, e.g. with a smaller inclination angle.

### List of reference numerals (Part of the Description)

- 1: air processing unit APU
- 2: air dryer unit
- 3: multi-circuit protection valve unit MCPVU
- 4: multi-circuit protection valve MCPV
- 5: MCPV housing
- 5a: mounting face
- 5b: top side
- 6: ECU
- 7: cartridge of the air dryer unit 2
- 8: interface body part of the MCPV housing
- 8a: outer connection face
- 9: dryer body of the air dryer unit 2
- 10: cover part of the MCPV housing
- 11: housing screws
- 12: plastic separator
- 13: interior space
- 14: plastic separator
- 15: gasket
- 16: gasket
- 17: gasket
- 18: functional parts
- 18a: pneumatic valves, in particular overflow valves
- 19: stack
- 20: ECU screws
- 22: ECU screw thread
- 24: dryer connecting screws
- 25: side faces
- 26: flange
- 27: plug, electrical connector
- 28: housing threads for receiving the housing screws

- 30: pneumatic ports
- 30b: pneumatic ports
- 31: inlet port
- 34, 35: Pneumatic connection
- 36: supply line
- 37: outlet line
- 36, 37: pneumatic passageways

- 40: pressure sensor
- 41: sensor bore 41

- 105: MCPV housing
- 108: interface body part
- 110: cover part
- 117: gasket
- 130: outlet port
- 131: inlet port
- 132: consumer circuits

- A: MCPV assembling direction
- B: ECU mounting direction
- C: connecting direction
- L1, L2: functional layers

## Claims

1. Multi-circuit protection valve unit (3) for an air processing unit (1) of a commercial vehicle, said multi-circuit protection valve unit (3) comprising a multi-circuit protection valve (4) and an ECU (6) assembled to said multi-circuit protection valve (4), wherein said multi-circuit protection valve (4) comprises
- an MCPV housing (5) comprising an interface body part (8) made of metal and a cover part (10) made of metal, said interface body part (8) and said cover part (10) defining an interior space (13) between them,
- housing screws (11) connecting said interface body part (8) and said cover part (10) together,
- functional parts (18), including pneumatic valves (18a), provided in said interior space (13),
- sealing means (15, 16, 17) provided between said interface body part (8) and said cover part (10),
separator means (12, 14) provided between said interface body part (8) and said cover part (10), thereby defining pneumatic passageways (36, 37) in said interior space (13),
wherein said interface body part (8) comprises pneumatic ports (30, 30b, 130, 131) for connecting said multi-circuit protection valve unit (3) to consumer circuits (132), **characterized in that**
said interface body part (8), said cover part (10), said sealing means (15, 16, 17), said separator means (12, 14), and at least some of said functional parts (18) are assembled as a stack (19) in a common assembling direction (A),
wherein said housing screws (11) are inserted in said assembling direction (A), and wherein said ECU (6) is attached to said MCPV housing (5) in an ECU mounting direction (B) that is perpendicular to said assembling direction (A).

2. Multi-circuit protection valve unit (3) according to claim 1, wherein
said interface body part (8) and said cover part (10) each comprise ECU screw threads (22) extending in said ECU mounting direction (B), respectively,
said ECU (6) being assembled to said interface body part (8) and said cover part (10) via ECU screws (20) inserted in said ECU mounting direction (B) into said ECU screw threads (22).

3. Multi-circuit protection valve unit (3) according to claim 1 or 2, wherein
said separator means (12, 14) comprise at least one plastic separator (12, 14) and said sealing means (17) comprise at least one gasket (15, 16, 17) for sealing said interior space (13),
said interface body part (8), said cover part (10), said at least one plastic separator (12, 14), and said at least one gasket (15, 16, 17) defining said interior space (13) in which said functional parts (18) are received.

4. Multi-circuit protection valve unit (3) according to one of the preceding claims, wherein said functional parts (18) comprise one or more of the following elements: Pneumatic valves, in particular overflow valves (18a), pressure limiters, check valves, double check valves, solenoid valves.

5. Multi-circuit protection valve unit (3) according to one of the preceding claims, wherein said interface body part (8) and said cover part (10) are made of aluminium, in particular as cast parts.

6. Multi-circuit protection valve unit (3) according to one of the preceding claims, wherein all elements of said multi-circuit protection valve (4) are sticked together as a stack (19) in said assembling direction (A).

7. Multi-circuit protection valve unit (3) according to one of the preceding claims, wherein said interface body part (8) comprises a rectangular or cuboid shape with four rectangular side faces (25), one side face serving as a mounting face (5a),
wherein a flange (26) is formed on said mounting face (5a), and
wherein said ECU (6) is assembled to said flange (26).

8. Multi-circuit protection valve unit (3) according to claim 7, wherein said interface body part (8) comprises a pneumatic sensor bore (41) extending to said flange (26), wherein a pressure sensor (40) provided in said ECU (6) is facing said pneumatic sensor bore (41), for measuring a pressure in said pneumatic sensor bore (41).

9. Multi-circuit protection valve unit (3) according to one of the preceding claims, wherein an inlet port (131) of said multi-circuit protection valve (4) and at least one outlet port (130) of said multi-circuit protection valve (4), preferably all pneumatic outlet ports (131) for consumer circuits (132), are facing one common connecting direction (C).

10. Multi-circuit protection valve unit (3) according to one of the preceding claims, wherein an inlet port (31, 131) of said multi-circuit protection valve (4) and/or at least one outlet port (30, 130) of said multi-circuit protection valve (4) extend in a connecting direction (C) which coincides with said assembling direction (A).

11. Multi-circuit protection valve unit (3) according to one of the preceding claims, wherein said cover part (10) is a radiator part for cooling said interior space (13), in particular solenoid valves in said interior space (13)

12. Air processing unit (1) for a pneumatic system of a commercial vehicle, said air processing unit (1) comprising
a multi-circuit protection valve unit (3) according to one of the preceding claims, and an air dryer unit (2) pneumatically connected to an inlet port (31, 131) of said cover part (10) of said multi-circuit protection valve unit (3),
said air processing unit (2) comprising a dryer body (9).

13. Air processing unit (1) according to claim 12,
wherein said dryer body (9) is mounted on said cover part (10) of said multi-circuit protection valve unit (3) via dryer connecting screws (24) extending in said assembling direction (A).

14. Air processing unit (1) according to claim 12,
wherein said air dryer unit (2) is separate from said multi-circuit protection valve unit (3), wherein pneumatic passageways (36, 37), e. g. pneumatic pipes or pneumatic hoses, are provided between said dryer body (9) and said cover part (10).

15. Pneumatic system of a commercial vehicle, said pneumatic system comprising an air processing unit (1) according to one of claims 12 to 14.

16. Method for assembling a multi-circuit protection valve unit (3), comprising the steps:
providing a stack (19) in an assembling direction (A), said stack (19) comprising an interface body part (8) made of metal and a cover part (10) made of metal as outer parts of said stack (19),
between said interface body part (8) and said cover part (10) sealing means (15, 16, 17), separator means (16), and functional pneumatic parts (18), said functional pneumatic parts (18) comprising pneumatic valves (18a) and being separated by said separator means (12, 14), (ST1)
inserting and tightening housing screws (11) through said interface body part (8) and said cover part (10) in said assembling direction (A), thereby fixing said interface body part (8) and said cover part (10) together and forming an MCPV housing (5), thereby closing and sealing an interior space (13) in said MCPV housing (5) with pneumatic passageways (36, 37), (ST2), and
assembling an ECU (6) to said MCPV housing (5) in an ECU assembling direction (B), which is perpendicular to said assembling direction (A) (ST3).
